# EUROPÄISCHE PATENTSCHRIFT

(11) **EP 2 107 872 B1**
(45) Veröffentlichungstag und Bekanntmachung des Hinweises auf die Patenterteilung: **24.03.2010**
(21) Anmeldenummer: 07858025.5
(22) Anmeldetag: 21.12.2007
(51) Int. Cl.: A23G 3/14, A23G 3/00

(54) **VORRICHTUNG UND VERFAHREN ZUR HERSTELLUNG EINER FONDANTMASSE**
APPARATUS AND METHOD FOR THE PRODUCTION OF A FONDANT MIXTURE
DISPOSITIF ET PROCÉDÉ POUR FABRIQUER UNE PÂTE DE FONDANT

(30) Priorität: 08.01.2007 DE 102007001292
(43) Veröffentlichungstag der Anmeldung: 14.10.2009
(73) Patentinhaber: Robert Bosch GmbH, 70442 Stuttgart (DE)
(72) Erfinder: WOELK, Steffen, 41472 Neuss (DE); ULRICH, Joachim, 06120 Halle / Saale (DE); HEINICKE, Olaf, 40882 Ratingen (DE); WILKE, Bernd, 71397 Leutenbach (DE)
(86) Internationale Anmeldenummer: PCT/EP2007/064407
(87) Internationale Veröffentlichungsnummer: WO 2008/083911

(56) Entgegenhaltungen:
- WO-A-92/20420
- DE-A1- 1 923 636
- DE-A1- 3 229 937

## Beschreibung

### Stand der Technik

Die vorliegende Erfindung betrifft eine Vorrichtung und ein Verfahren zur Herstellung einer Fondantmasse, welche insbesondere zur Herstellung von Süßwaren verwendet wird.

Zur Herstellung einer Fondantmasse wird üblicherweise eine übersättigte Zucker-Glukose-Lösung mit einem hohen Zuckeranteil verwendet. Diese Lösung wird dann durch schonende Temperierung auf einen Bereich stärkerer Übersättigung abgekühlt und dann durch einen mechanischen Vorgang mit einer Tablierschnecke oder einem Paddelmischer unter weiterer Kühlung gezielt einer Scherung ausgesetzt. Hierdurch wird ein Rekristallisationsprozess in der Fondantmasse ausgelöst. Anschließend erfolgt eine weitere Verarbeitung zu einer gewünschten Süßware. Um eine ausreichende Kristallisation der Fondantmasse zu erreichen, umfasst somit eine Maschine zur industriellen Herstellung von Fondantmassen einen relativ großen mechanischen Mischbereich. Insbesondere sind große und lange Kühlschnecken mit anschließenden Tablierschnecken oder große Paddelmischer notwendig, um durch Scherung die Rekristallisation in der Fondantmasse anzustoßen und die entstandenen Kristalle zu verteilen. Hierbei müssen bis zu drei Schnecken mit einer Gesamtlänge von über 3 m nacheinander in Reihe geschaltet werden, um ein Produkt hoher Qualität mit möglichst gleichmäßiger Kristallverteilung und kleiner Kristallgröße herzustellen. Ferner bieten die bekannten Anlagen keine Möglichkeit, eine genaue Einstellung von Menge und Größe der Zuckerkristalle vorzunehmen. Für eine hohe Qualität der Fondantmasse sollte jedoch eine möglichst kleine Kristallgröße derart erreicht werden, dass ca. 90 % der Kristalle eine Größe von kleiner als 20 µm erreichen.

Aus der DE-1923636 ist eine Vorrichtung zur Herstellung von Fondantmasse bekannt, bei welcher am Ausgang eine Ultraschallvorrichtung vorgesehen ist, um die Fondantreigung zu Verbessern.

### Vorteile der Erfindung

Die erfindungsgemäße Vorrichtung zur Herstellung einer Fondantmasse mit den Merkmalen des Patentanspruchs 1 weist demgegenüber den Vorteil auf, dass sie einen signifikant einfachen und kostengünstigen Aufbau aufweist. Ferner kann gezielt eine Änderung von Menge und Größe der Kristalle in der Fondantmasse eingestellt werden. Dies wird erfindungsgemäß dadurch erreicht, dass die Vorrichtung eine Ultraschalleinrichtung umfasst, welche Ultraschall in einen Leitungsabschnitt, in welchen eine Fondantausgangslösung gefördert wird, einbringt, um eine Kristallisation in der Fondantausgangslösung anzustoßen, um die kristalline Fondantmasse herzustellen. Der in die Fondantausgangslösung eingebrachte Ultraschall erzeugt aufgrund von implodierenden Bläschen lokale Druckänderungen, an denen sich Kristallisationskeime bilden und somit die Kristallisation in der Fondantausgangslösung anstoßen. Die Form und Größe der entstehenden Kristalle kann dabei durch eine Regelung der Amplitude des Ultraschalls verändert werden. Dadurch können unterschiedliche Kristallformen und unterschiedliche Kristallgrößen hergestellt werden. Durch das Einbringen von Ultraschall werden sogenannte "Impfkristalle" erzeugt, an denen sich die Kristallisation fortsetzt.

Die Unteransprüche zeigen bevorzugte Weiterbildungen der Erfindung.

Vorzugsweise umfasst die Ultraschalleinrichtung eine Sonotrode, welche in der Fondantausgangslösung angeordnet ist. Somit ragt die Sonotrode in die Fondantausgangslösung und wird von dieser umspült. Dadurch kann eine gezielte Einbringung des Ultraschalls zur Bildung von Kristallisationskeimen ausgeführt werden.

Weiter bevorzugt umfasst die Vorrichtung eine Kühlvorrichtung. Die Kühlvorrichtung ist vorzugsweise in Strömungsrichtung der Fondantausgangslösung vor der Ultraschalleinrichtung und/oder im Bereich der Ultraschalleinrichtung und/oder nach der Ultraschalleinrichtung angeordnet. Die Kühleinrichtung hat insbesondere die Aufgabe, die aufgrund der Kristallisation entstehende Wärme wieder aus der Masse abzuführen. Die Kühlung erfolgt damit besonders bevorzugt mittels Wasser. Hierzu umfasst die Kühleinrichtung weiter bevorzugt ein doppelwandiges Rohr, wobei im Inneren des Rohrs die Masse gefördert wird und zwischen den beiden Wänden des doppelwandigen Rohrs eine Kühlflüssigkeit zugeführt wird. Die Kühlflüssigkeit kann dabei in Strömungsrichtung der Masse oder gegen die Strömungsrichtung der Masse geführt werden.

Besonders bevorzugt ist die Ultraschalleinrichtung in einem T-förmigen Rohrstück angeordnet. Hierdurch kann ein besonders kompakter und einfacher Aufbau bereitgestellt werden.

Weiter bevorzugt umfasst der Abfuhrbereich der Vorrichtung einen Mischbereich mit einem Vakuum. Hierdurch kann ein zusätzlicher Entzug von Wasser aus der Masse durch eine Nachverdampfung erfolgen, so dass es in diesem Bereich zu einer stärkeren Übersättigung der Masse kommt. Dadurch wird die Kristallbildung in der Masse verstärkt. Erfindungsgemäß wird hierbei unter dem Begriff "Vakuum" ein Unterdruck verstanden, welcher signifikant unterhalb des Umgebungsdrucks liegt. Das Vakuum wird vorzugsweise mittels einer Saugeinrichtung erzeugt.

Gemäß einer weiteren bevorzugten Ausgestaltung der Erfindung umfasst die Vorrichtung ferner einen Mischer, welcher in Strömungsrichtung der Fondantausgangslösung nach der Ultraschalleinrichtung angeordnet ist, um die Masse, in welche die Kristallisationskeime befindlich sind, zu durchmischen und die Kristallisation weiter kontrolliert aufrecht zu erhalten. Der Mischer ist vorzugsweise ein dynamischer Mischer, wie beispielsweise eine rotierende Schnecke oder rotierende Paddel, oder vorzugsweise ein statischer Mischer, wie z.B. feststehende Leitbleche in einem Rohr.

Weiter bevorzugt ist die Kühleinrichtung zusätzlich auch im Bereich des Mischers angeordnet oder im Bereich des Mischers ist eine zweite Kühleinrichtung angeordnet. Hierdurch kann insbesondere sichergestellt werden, dass eine weitere Abkühlung der Masse am Mischer erfolgt.

Die vorliegende Erfindung betrifft ferner ein Verfahren zur Herstellung einer Fondantmasse, wobei eine Kristallisation der Fondantmasse mittels Ultraschall eingeleitet wird. Erfindungsgemäß wird hierbei eine Fondantausgangslösung mit Ultraschall beschallt, wodurch in der Fondantausgangslösung aufgrund von Kavitationseffekten durch implodierende Bläschen Kristallisationskeime entstehen, an denen eine Kristallisation der Fondantausgangslösung sich fortpflanzen kann. Durch die Verwendung des Ultraschalls kann das Verfahren insbesondere durch eine Regelung der Amplitude des Ultraschalls und der Zeitdauer des Anwendens von Ultraschall gesteuert werden, so dass möglichst eine Fondantmasse hergestellt wird, bei der mindestens 90 % der Kristalle eine Kristallgröße von kleiner als 20 µm aufweisen. Dadurch kann eine sehr homogene und kleinkristalline Fondantmasse bereitgestellt werden.

Vorzugsweise umfasst das Verfahren ferner den Schritt des Durchmischens der Fondantausgangslösung nach dem Einbringen des Ultraschalls. Dadurch können die durch den Ultraschall erzeugten Kristallkeime in definierter Weise durch die Durchmischung, beispielsweise mittels mechanischer, angetriebener Mischer oder mittels statischer Mischer, z.B. feststehende Leitbleche im Rohr, in definierter Weise erzeugt werden.

Weiter bevorzugt wird der Ultraschall kontinuierlich oder in vorbestimmten Intervallen in die Fondantausgangslösung eingebracht. Auch hierdurch kann die Größe und Art der Kristalle gesteuert werden.

### Zeichnung

Nachfolgend werden bevorzugte Ausführungsbeispiele der Erfindung unter Bezugnahme auf die begleitende Zeichnung im Detail beschrieben. In der Zeichnung ist:
- Figur 1: eine schematische Schnittansicht einer Vorrichtung zur Herstellung einer Fondantmasse gemäß einem ersten Ausführungsbeispiel der Erfindung,
- Figur 2: eine schematische Schnittansicht einer Vorrichtung zur Herstellung von Fondantmassen gemäß einem zweiten Ausführungsbeispiel der Erfindung, und
- Figur 3: eine schematische Schnittansicht einer Vorrichtung zur Herstellung von Fondantmassen gemäß einem dritten Ausführungsbeispiel der Erfindung.

### Bevorzugte Ausführungsformen der Erfindung

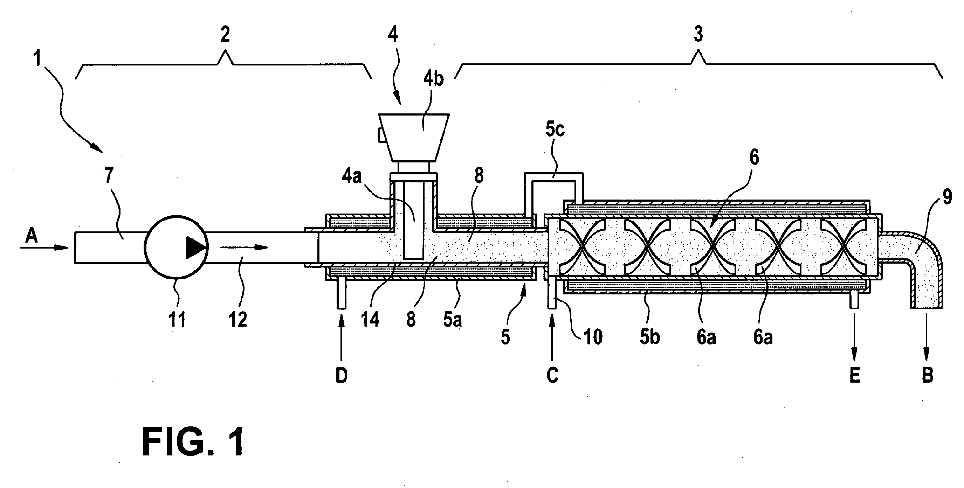

Nachfolgend wird unter Bezugnahme auf Figur 1 eine Vorrichtung 1 zur Herstellung einer Fondantmasse 9 im Detail beschrieben. Figur 1 zeigt hierbei insbesondere den Teil einer Maschine, in welchem die Kristallisation durchgeführt wird. Für die Fondantmasse wird in einem ersten Schritt eine Zuckerlösung 7 als Fondantausgangslösung hergestellt, welche im Wesentlichen eine übersättigten Zucker-Glukose-Lösung mit hohem Zuckeranteil ist. Diese Zuckerlösung 7 wird, wie durch den Pfeil A in Figur 1 angedeutet, mittels einer Pumpe 11 in eine Leitung 12 gefördert. Ein Ende der Leitung 12 mündet in einem T-Stück 14, in welchem eine Ultraschalleinrichtung 4 angeordnet ist. Eine Sonotrode 4a der Ultraschalleinrichtung 4 ragt dabei in die strömende Zuckerlösung 7 (vgl. Figur 1). Durch die T-förmige Ausbildung der Leitung kann die Sonotrode 4a einfach in die strömende Zuckerlösung 7 integriert werden. Die Ultraschalleinrichtung 4 umfasst einen Generator 4b und eine Sonotrode 4a. Der Generator erzeugt die Ultraschallleistung, welche dann über die Sonotrode 4a in den kontinuierlich strömenden Zuckermassenstrom eingebracht wird. Ein Bereich, welcher in Strömungsrichtung vor der Ultraschalleinrichtung 4 liegt, wird als Zufuhrbereich 2 bezeichnet und ein Bereich, welcher in Strömungsrichtung nach der Ultraschalleinrichtung 4 angeordnet ist, wird als Abfuhrbereich 3 bezeichnet.

Die Vorrichtung 1 umfasst ferner eine Kühleinrichtung 5, welche die Aufgabe hat, die kristallisierende Zuckerlösung 7 zu kühlen. Wie aus Figur 1 ersichtlich ist, umfasst die Kühleinrichtung 5 ein erstes Kühlrohr 5a, welches im Bereich des T-Stücks 14 angeordnet ist, und ein zweites Kühlrohr 5b, welches im Abfuhrbereich 3 angeordnet ist. Das erste Kühlrohr 5a ist über eine Verbindungsleitung 5c mit dem zweiten Kühlrohr 5b verbunden. In diesem Ausführungsbeispiel sind die beiden Kühlrohre 5a, 5b als doppelwandige Rohre vorgesehen, in deren Innerem die Zuckerlösung 7 strömt und ein Kühlmittel, wie z.B. Wasser, zwischen den beiden Wänden im doppelwandigen Rohr geführt wird. Eine Strömungsrichtung des Kühlmittels ist dabei gleich wie eine Strömungsrichtung der Zuckerlösung 7. Das Zuströmen des Kühlmittels in die Kühleinrichtung 5 wird durch den Pfeil D angedeutet und ein Abströmen des Kühlmittels wird durch den Pfeil E angedeutet.

Die Vorrichtung I umfasst ferner einen Mischer 6, welcher in Strömungsrichtung der Zuckerlösung nach der Ultraschalleinrichtung 4 angeordnet ist. Der Mischer 6 ist in diesem Ausführungsbeispiel ein statischer Mischer, welcher durch Anordnen von feststehenden Leitblechen 6a im Inneren des Rohres bereitgestellt wird. Wie aus Figur 1 ersichtlich ist, sind hierbei eine Vielzahl von Leitblechen 6a im Inneren des Rohres angeordnet, an denen eine Umlenkung der kristallisierenden Zuckerlösung erfolgt.

Die Funktion der erfindungsgemäßen Vorrichtung 1 ist dabei wie folgt: Die Zuckerlösung 7 wird über die Leitung 12 an der Ultraschalleinrichtung 4 vorbeigeführt. Durch die Sonotrode 4a wird Ultraschall auf die übersättigte Zuckerlösung 7 aufgebracht, so dass durch implodierende Bläschen lokale Druckänderungen in der Zuckerlösung 7 auftreten. Diese implodierenden Bläschen führen zur Bildung von Kristallisationskeimen, an denen sich die Kristallisation der Zuckerlösung weiter fortpflanzt. Die aufgrund der Kristallisation frei werdende Wärme wird dabei unmittelbar im Bereich der Ultraschalleinrichtung 4 durch die Kühleinrichtung 5 größtenteils wieder abgeführt. Wie in Figur 1 schematisch angedeutet, verstärkt sich die Kristallbildung in Strömungsrichtung nach der Ultraschalleinrichtung 4. Dies wird zusätzlich noch durch den statischen Mischer 6 unterstützt, welcher die Zuckerlösung mit den darin gebildeten Kristallen umlenkt und so die Kristallisation in definierter Weise weiterführt. Im Bereich des statischen Mischers wird die durch die weitergehende Kristallisation entstehende Wärme ebenfalls durch die Kühleinrichtung abgeführt. Nach dem Ende des Mischers 6 ist dann eine Fondantmasse 9 entstanden, welche eine gewünschte Kristallgröße und somit eine entsprechende Fondantqualität aufweist. Die Größe der Kristalle kann hierbei insbesondere durch eine Änderung der Amplitude des Ultraschalls oder durch eine Änderung einer Zeitdauer der Beschallung eingestellt werden. Die Fondantmasse 9 wird dann, wie durch den Pfeil B angedeutet, zur Weiterverarbeitung für eine Herstellung von Süßwaren verwendet. Falls gewünscht, kann über eine Leitung 10, welche vor dem statischen Mischer 6 angeordnet ist, noch einer oder mehrere Zusätze, z.B. Farbstoffe oder Geschmacksstoffe, zugeführt werden. Da dies vor dem Mischer 6 geschieht, ist sichergestellt, dass eine ausreichende Durchmischung der Zusätze mit der Zuckerlösung 7 auftritt. Dadurch erfolgt eine gleichmäßige Verteilung der Zusätze in der Fondantmasse 9.

Eine Temperatur der kristallisierten Fondantmasse 9 am Austritt liegt vorzugsweise zwischen 55°C und 60°C, kann evtl. jedoch auch bis 70°C betragen. Die Zufuhrtemperatur der übersättigten Zuckerlösung 7 beträgt vorzugsweise ca. 55°C.

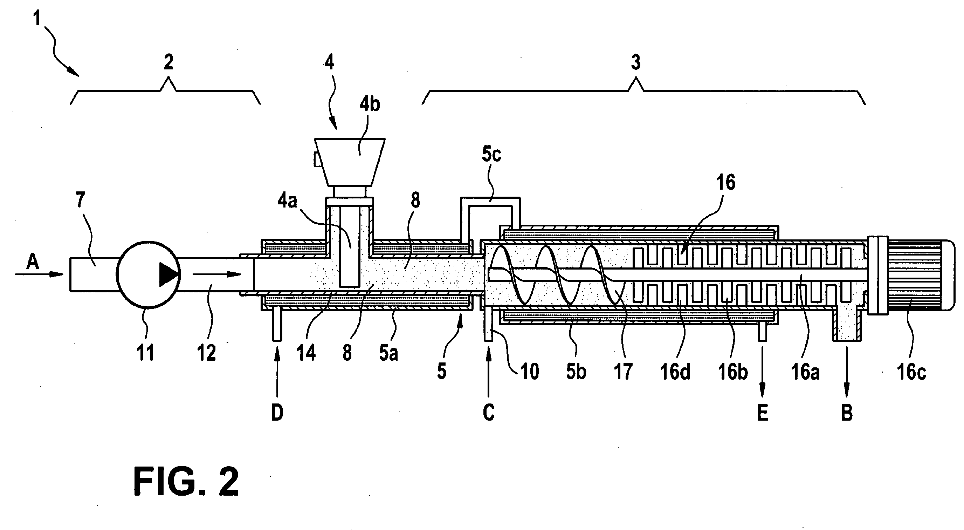

Nachfolgend wird unter Bezugnahme auf Figur 2 eine Vorrichtung 1 gemäß einem zweiten Ausführungsbeispiel der Erfindung beschrieben. Gleiche bzw. funktional gleiche Teile sind mit den gleichen Bezugszeichen wie im ersten Ausführungsbeispiel bezeichnet.

Wie aus Figur 2 ersichtlich ist, ist im Unterschied zum ersten Ausführungsbeispiel beim zweite Ausführungsbeispiel der Abfuhrbereich 3 unterschiedlich ausgebildet. Beim zweiten Ausführungsbeispiel ist kein Mischer in Form von in der Leitung fixierten Leitblechen vorgesehen, sondern eine Durchmischung erfolgt mittels eines dynamischen Mischers 16. Der dynamische Mischer 16 umfasst eine Welle 16a, auf welcher eine Vielzahl von Mischpaddel 16b angeordnet sind. Es sei angemerkt, dass anstelle der Mischpaddel auch z.B. Mischstifte o.Ä. vorgesehen sein können. Die Mischpaddel 16b sorgen für eine intensive Durchmischung der Masse. Ferner ist auf der Welle 16a des dynamischen Mischers zu Beginn der Mischstrecke noch eine Schneckeneinrichtung 17 vorgesehen. Die Schneckeneinrichtung 17 kann einen oder mehrere Schneckengänge umfassen und gewährleistet ein sicheres Zwangsfördern der Masse. Die Welle 16a des dynamischen Mischers 16 wird mittels eines Antriebs 16c, z.B. ein Elektromotor, angerieben. Ferner sind am Gehäuserand der Mischstrecke noch feststehende Paddel 16d angeordnet. Somit wird die an der Ultraschalleinrichtung 4 begonnene Kristallisation durch den dynamischen Mischer 16 fortgeführt.

Ansonsten entspricht dieses Ausführungsbeispiel dem vorhergehenden Ausführungsbeispiel, so dass auf die dort gegebene Beschreibung verwiesen werden kann.

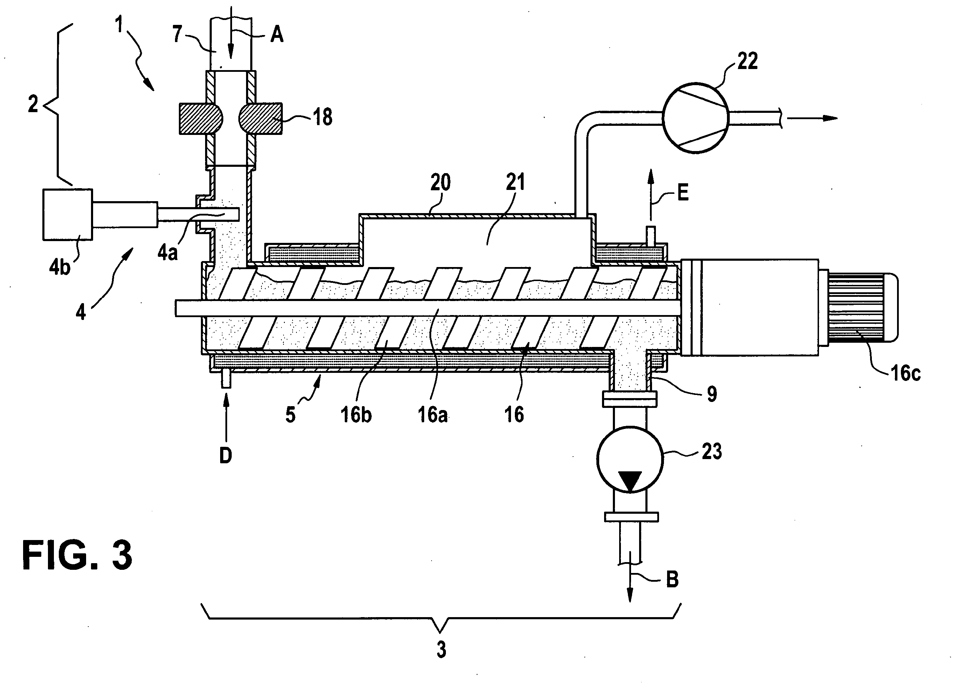

Nachfolgend wird unter Bezugnahme auf Figur 3 eine Vorrichtung 1 gemäß einem dritten Ausführungsbeispiel der Erfindung im Detail beschrieben. Gleiche bzw. funktional gleiche Teile sind wieder mit den gleichen Bezugszeichen wie in den vorhergehenden Ausführungsbeispielen bezeichnet.

Wie aus Figur 3 ersichtlich ist, umfasst die Vorrichtung 1 zur Herstellung einer Fondantmasse 9 wiederum einen Zufuhrbereich 2 und einen Abfuhrbereich 3. In diesem Ausführungsbeispiel ist jedoch der Zufuhrbereich 2 in einem Winkel von 90° zum Abfuhrbereich 3 angeordnet. Zum Anstoßen der Kristallisation ist wieder eine Ultraschalleinrichtung 4 mit einer in die strömende Zuckerlösung 7 ragenden Sonotrode 4a vorgesehen. In Strömungsrichtung der Zuckerlösung 7 vor der Ultraschalleinrichtung 4 ist ein Quetschventil 18 für eine Zumessung der Zuckerlösung 7 vorgesehen. Im Abfuhrbereich 3 ist ähnlich wie im zweiten Ausführungsbeispiel ein dynamischer Mischer 16, umfassend eine Welle 16a, eine Vielzahl von Mischerpaddel 16b und ein Antrieb 16c sowie eine Kühleinrichtung 5, angeordnet.

Im Unterschied zum zweiten Ausführungsbeispiel sind jedoch bei diesem Ausführungsbeispiel am Rand des Mischungsbereichs keine feststehenden Mischerpaddel vorgesehen. Zusätzlich können jedoch feststehende Mischelemente im Mischbereich vorgesehen werden. Der dynamische Mischer 16 ist in einem Mischerraum 20 angeordnet, in welchem ein Vakuum 21 angelegt wird. Dies erfolgt mittels einer Saugeinrichtung 22. Durch das Anlegen des Vakuums ergibt sich eine Temperaturabsenkung, so dass eine Nachverdampfung von in der Masse enthaltenen Wassers auftritt. Diese Wasserdämpfe werden mittels der Saugeinrichtung 22 abgeführt, so dass die Masse im Bereich des dynamischen Mischers 16 eine stärkere Übersättigung aufweist. Hierdurch wird die Kristallbildung verstärkt, so dass durch Unterstützung des dynamischen Mischers 16 die Kristalle weiter verteilt werden und die Anregung zusätzlicher Kristalle verstärkt wird. Die Kühleinrichtung 5 sorgt in diesem Ausführungsbeispiel ebenfalls für das Abführen der durch die Scherung mittels der Mischerpaddel 16b und die Kristallbildung eingebrachten Wärme. Durch das zusätzliche Ausdampfen von Wasser mittels des Vakuums 21 kann beim dritten Ausführungsbeispiel die Temperatur im Zufuhrbereich 2 der übersättigten Zuckerlösung 7 auch 100°C oder mehr betragen.

Ferner ist eine Pumpe 23 vorgesehen, um die fertigkristallierte Fondantmasse 9 aus dem Mischbereich abzuziehen.

Ansonsten entspricht dieses Ausführungsbeispiel den vorhergehenden Ausführungsbeispielen, so dass auf die dort gegebene Beschreibung verwiesen werden kann.

Mit der in den drei Ausführungsbeispielen beschriebenen Vorrichtung 1 zur Herstellung einer Fondantmasse kann somit eine gezielte Kristallisation der Zuckerlösung 7 erreicht werden. Es sei angemerkt, dass erfindungsgemäß unter dem Begriff "Zucker" bzw. "Glukose" auch Zuckeraustauschstoffe bzw. Glukoseaustauschstoffe verstanden werden. Die hergestellte Fondantmasse kann insbesondere zur Herstellung von Fondantgießprodukten, Produkten mit Formauffüllungen, Fondantüberzüge für Backwarenartikel sowie als Zusatz für Toffeeartikel oder Kaubonbonartikel verwendet werden.

## Patentansprüche

1. Vorrichtung zur Herstellung einer Fondantmasse (9), umfassend einen Zufuhrbereich (2) zur Zuführung einer Fondantausgangslösung (7), eine Ultraschalleinrichtung (4), welche Ultraschall in die Fondantausgangslösung (7) zuführt, um eine Kristallisation in der Fondantausgangslösung anzustoßen, und einen Abfuhrbereich (3), um die kristallisierte Fondantmasse (9) abzuführen.

2. Vorrichtung nach Anspruch 1, **dadurch gekennzeichnet, dass** die Ultraschalleinrichtung (4) eine Sonotrode (4a) umfasst, welche in der Fondantausgangslösung (7) angeordnet ist.

3. Vorrichtung nach einem der vorhergehenden Ansprüche, ferner umfassend eine Kühlvorrichtung (5; 15).

4. Vorrichtung nach Anspruch 3, **dadurch gekennzeichnet, dass** die Kühleinrichtung (5; 15) in Strömungsrichtung der Fondantausgangslösung vor der Ultraschalleinrichtung (4) und/oder an der Ultraschalleinrichtung (4) und/oder nach der Ultraschalleinrichtung (4) angeordnet ist.

5. Vorrichtung nach einem der vorhergehenden Ansprüche, **dadurch gekennzeichnet, dass** die Ultraschalleinrichtung (4) in einem T-förmigen Rohrstück (14) angeordnet ist.

6. Vorrichtung nach einem der vorhergehenden Ansprüche, **dadurch gekennzeichnet, dass** der Abfuhrbereich (3) einen Mischbereich (20) mit einem Vakuum (21) umfasst.

7. Vorrichtung nach einem der vorhergehenden Ansprüche, **dadurch gekennzeichnet, dass** der Abfuhrbereich (3) einen Mischer (6) umfasst.

8. Vorrichtung nach Anspruch 7, **dadurch gekennzeichnet, dass** der Mischer ein dynamischer Mischer oder ein statischer Mischer ist.

9. Vorrichtung nach einem der Ansprüche 3 bis 8, **dadurch gekennzeichnet, dass** die Kühleinrichtung (5; 15) auch im Bereich des Mischers angeordnet ist.

10. Verfahren zur Herstellung einer Fondantmasse (9) aus einer Fondantausgangslösung (7), **dadurch gekennzeichnet, dass** eine Kristallisation der Fondantausgangslösung (7) mittels Ultraschall eingeleitet wird.

11. Verfahren nach Anspruch 10, **dadurch gekennzeichnet, dass** die durch den Ultraschall angestoßene teilkristallisierte Fondantausgangslösung (7) durch Mischen zu einer kristallisierten Fondantmasse (9) wird.

12. Verfahren nach Anspruch 10 oder 11, **dadurch gekennzeichnet, dass** Ultraschall kontinuierlich oder in Intervallen mit konstanter oder veränderter Amplitude in die Fondantausgangslösung (7) eingebracht wird.

## Claims

1. Apparatus for the production of a fondant substance (9), comprising a supply region (2) for the supply of a fondant starting solution (7), an ultrasonic device (4) which feeds ultrasound into the fondant starting solution (7) in order to trigger crystallization in the fondant starting solution, and a discharge region (3) in order to discharge the crystallized fondant substance (9).

2. Apparatus according to Claim 1, **characterized in that** the ultrasonic device (4) comprises a sonotrode (4a) which is arranged in the fondant starting solution (7).

3. Apparatus according to one of the preceding claims, furthermore comprising a cooling device (5; 15).

4. Apparatus according to Claim 3, **characterized in that** the cooling device (5; 15) is arranged upstream of the ultrasonic device (4) and/or at the ultrasonic device (4) and/or downstream of the ultrasonic device (4) in the direction of flow of the fondant starting solution.

5. Apparatus according to one of the preceding claims, **characterized in that** the ultrasonic device (4) is arranged in a T-shaped tubular piece (14).

6. Apparatus according to one of the preceding claims, **characterized in that** the discharge region (3) comprises a mixing region (20) having a vacuum (21).

7. Apparatus according to one of the preceding claims, **characterized in that** the discharge region (3) comprises a mixer (6).

8. Apparatus according to Claim 7, **characterized in that** the mixer is a dynamic mixer or a static mixer.

9. Apparatus according to one of Claims 3 to 8, **characterized in that** the cooling device (5; 15) is also arranged in the region of the mixer.

10. Method for the production of a fondant substance (9) from a fondant starting solution (7), **characterized in that** crystallization of the fondant starting solution (7) is initiated by means of ultrasound.

11. Method according to Claim 10, **characterized in that** the partly crystallized fondant starting solution (7) triggered by the ultrasound becomes a crystallized fondant substance (9) as a result of mixing.

12. Method according to Claim 10 or 11, **characterized in that** ultrasound is introduced into the fondant starting solution (7) continuously or at intervals of constant or varied amplitude.

## Revendications

1. Dispositif pour fabriquer une pâte de fondant (9), comprenant une zone d'alimentation (2) pour l'alimentation d'une solution de préparation de fondant (7), un dispositif à ultrasons (4), qui introduit des ultrasons dans la solution de préparation de fondant (7), afin d'amorcer une cristallisation dans la solution de préparation de fondant, et une zone d'évacuation (3) pour évacuer la pâte de fondant cristallisée (9).

2. Dispositif selon la revendication 1, **caractérisé en ce que** le dispositif à ultrasons (4) comprend une sonotrode (4a) qui est disposée dans la solution de préparation de fondant (7).

3. Dispositif selon l'une quelconque des revendications précédentes, comprenant en outre un dispositif de refroidissement (5 ; 15).

4. Dispositif selon la revendication 3, **caractérisé en ce que** le dispositif de refroidissement (5 ; 15) est disposé dans la direction d'écoulement de la solution de préparation de fondant avant le dispositif à ultrasons (4) et/ou au niveau du dispositif à ultrasons (4) et/ou après le dispositif à ultrasons (4).

5. Dispositif selon l'une quelconque des revendications précédentes, **caractérisé en ce que** le dispositif à ultrasons (4) est disposé dans une pièce tubulaire en forme de T (14).

6. Dispositif selon l'une quelconque des revendications précédentes, **caractérisé en ce que** la zone d'évacuation (3) comprend une zone de mélange (20) avec un vide (21).

7. Dispositif selon l'une quelconque des revendications précédentes, **caractérisé en ce que** la zone d'évacuation (3) comprend un mélangeur (6).

8. Dispositif selon la revendication 7, **caractérisé en ce que** le mélangeur est un mélangeur dynamique ou un mélangeur statique.

9. Dispositif selon l'une quelconque des revendications 3 à 8, **caractérisé en ce que** le dispositif de refroidissement (5, 15) est également disposé dans la région du mélangeur.

10. Procédé de fabrication d'une pâte de fondant (9) à partir d'une solution de préparation de fondant (7), **caractérisé en ce qu'**une cristallisation de la solution de préparation de fondant (7) est amorcée au moyen d'ultrasons.

11. Procédé selon la revendication 10, **caractérisé en ce que** la solution de préparation de fondant (7) partiellement cristallisée sollicitée par les ultrasons est transformée en une pâte de fondant (9) cristallisée par malaxage.

12. Procédé selon la revendication 10 ou 11, **caractérisé en ce que** des ultrasons sont introduits en continu ou par intervalles d'amplitude constante ou variable dans la solution de préparation de fondant (7).
